# EUROPEAN PATENT APPLICATION

(11) **EP 4 575 847 A1**
(43) Date of publication of application: **25.06.2025**
(21) Application number: 23219614.7
(22) Date of filing: 22.12.2023
(51) Int. Cl.: G06F 21/32, G06F 21/45, G06Q 20/36, G06V 40/50, H04L 9/32, H04L 9/40

(54) **PROCESS AND DEVICE FOR ENROLLING A PERSON FOR BIOMETRIC AUTHENTICATION**

(71) Applicant: CryptoQorn AG, 6300 Zug (CH)
(72) Inventor: Herp, Arnold, 91096 Moehrendorf (DE); Bergqvist, Johan, 8172 Niederglatt ZH (CH)
(74) Representative: Prins Intellectual Property AG

(57) **Abstract**

The invention relates to a computer-implemented process for enrolling a person (P) for later biometric authentication using an official identification document (OID) and biometric features of the person (P-BF), wherein a golden sample (GS) of the biometric features (P-BF) is associated to a unique public key (pbl-key) of said person. It further relates to the computer-implemented process for authentication of a previously enrolled person and a biometric sensor device for use in a process for enrolling or authenticating the person.

## Description

### Technical Field

The invention relates to a computer-implemented process for enrolling a person for later biometric authentication and a computer-implemented process for authentication a person e.g. in a distributed ledger environment for performing a transaction. The invention further a biometric sensor device for such a process.

### Technical Background

To harmonize the legal regulations for conventional financial transactions, the EU, mainly the European Securities and Markets Authority (ESMA) has adopted the Markets in Crypto-Assets regulation (MiCA) for the harmonization of legal regulations for cryptographic blockchain-based financial transactions. MiCA applies to all natural and legal persons who issue crypto assets or provide services in connection with crypto assets in the EU. This includes issuers, traders, and brokers. MiCA will cover crypto assets that are not covered by existing financial services legislation. The draft law contains safeguards against market manipulation and financial crime, e.g. money laundering.

As with conventional financial transactions, the identification of the executing persons and ownership of a crypto-account is now also required for cryptographically processed transactions defined in the legal directives. In the conventional area, a person is authenticated based on an officially issued identity document (passport or ID card). A legal entity is authenticated based on company name, registration number in an official register, legal form, registered office, tax number and VAT ID, if applicable. The assignment of the crypto account (public wallet address) to the company can be done, for example, by asking an authorized representative of the company to transfer a certain small amount to the account of the person or company who is legally obliged to ensure traceability for official requirements in the event of suspicion.

The identification of natural and legal persons who carry out Distributed Ledger Technology (DLT) transactions that fall under the EU's Crypto Assets Regulation and Anti Money Laundering (AML) regulations must be guaranteed in future to be able to provide information to the competent authorities in suspicious cases.

To this end, it must be ensured that the procedure offers the highest possible level of security for all parties involved but can also be applied in an uncomplicated and practicable manner and that personal rights are adequately protected.

To execute a qualified digital signature in accordance with EU law, which is legally equivalent to an analogue signature, a certified identification procedure must be carried out in accordance with the elDAS Regulation (Regulation (EU) No 910/2014). The proof of identity (authentication) is executed within one transaction creating the digital signature in a digital document.

Identity verification can be carried out by a physical check by a trusted person or also remotely. The basis is always a comparison of the person's face with the picture on an officially issued identity card or passport. Only biometric authentication guarantees that nobody else was acting on behalf.

Once the personal data required to carry out transactions such as name, date of birth, place of birth, ID card or passport number, passport photo have been recorded for the first time by scanning the official document in addition to a separate live scan of the face for checking identity, identification for further transactions then only requires a comparison of the features from a current scan of the face (usually from a sequence of images from different positions) with the features extracted from the official document when a person was first recorded.

There are numerous providers of this method, which is used to identify people who wish to provide a qualified signature. For frequent use to confirm the identity of the person carrying out a DLT transaction, this method of repeated facial recognition with liveness verification has some disadvantages.
1. Facial recognition methods are not popular with the public because it is known that they can be used for general, unnoticed surveillance and are already being used in a variety of ways. This makes it much more difficult to achieve acceptance.
2. Since it is only an identification procedure based on biometric data, it is fundamentally less secure than a verification procedure in which an assigned ID (e.g. ID number) is used to check whether the characteristics of the stored face match the characteristics of the current image(s). In the case of identification, the assigned ID must be determined as the result.
3. The method also has the disadvantage that there is no solution known be linked to any additional but unique object that the user uses for special activities like a cryptographic transaction on a blockchain infrastructure.

A so-called wallet is required to carry out financial transactions in a blockchain DLT system. The wallet uses cryptographically secured methods to identify the values stored in the blockchain and to carry out transactions for creating, sending, and receiving. Methods are offered in a decentralized software application (DApp) for this purpose. Each wallet can reproducibly create a key pair via a so-called seed phrase, consisting of a unique private key to be kept secret for signing transactions and a unique public key that serves as the account number (wallet address). Depending on security requirements, you can choose between externally managed (custodial), locally personally managed (non-custodial) software wallets and hardware wallets.

With an externally managed software wallet, the key pairs are managed by a trustee. With a locally managed software wallet, the secret key is managed in encrypted form within the Dapp, whereby starting the Dapp is only secured by a password. In a hardware wallet, the key pair is generated and stored in special hardware with a crypto processor. The secret key for signing transactions never leaves this area, which is why the hardware wallet is the most secure method for managing digital assets. The Dapp is connected to the hardware wallet via an encrypted interface only for a short time to sign transactions. The hardware wallets on the market today are usually secured with a password, PIN or biometrically with a simple fingerprint scanner.

Know Your Customer (KYC): KYC is a process to identify and continuously verify customers during the business relationship with a (financial or non-financial) institution with a primary goal to comply with a set of regulatory requirements. The process of KYC may use physical or digital channels, sometimes called eKYC.

GDPR (General Data Protection Regulation): The General Data Protection Regulation (EU) (GDPR) is a regulation in EU law on data protection and privacy in the European Union (EU) and the European Economic Area (EEA). The GDPR is an important component of EU privacy law and of human rights law. The GDPR's primary aim is to enhance individuals' control and rights over their personal data and to simplify the regulatory environment for international business. GDPR-compliant refers to a process, which complies with GDPR.

eIDAS stands for electronic Identification, Authentication and Trust Services. The eIDAS Regulation (Regulation (EU) No 910/2014 of the European Parliament and of the Council of 23 July 2014) established the framework to ensure that electronic interactions between businesses are safer, faster and more efficient, no matter the European country they take place in. It is a European Regulation that created one single framework for electronic identification (elD) and trust services, making it more straightforward to deliver services across the European Union.

A decentralised software application (Dapp) is an application that can operate autonomously, typically through the use of smart contracts, that run on a decentralized computing, blockchain or distributed ledger technology.

An identification server (IDS) is a server infrastructure which may provide the background services for a Web2- and Smartphone based eIDAS compliant method of personal identity check. IDS stores e.g. the personal data extracted from passport or identity card as well as the golden templates of the face features to be compared with recently online captures face pictures. IDS can also provide services for other applications like generating qualified signatures on digital documents or forwarding personal data for KYC processes.

An application server (AS) is a server infrastructure which may provide background services for a Web3 application (Dapp) of brokers or traders or coin issuers in the crypto financial business.

A federation server (FS) infrastructure may provide background services for biometric based identification or verification devices. FS provides services for application system integration.

WO2020207947 describes a biometrics imaging device for capturing image data of a body part of a person comprises at least one of a visible light sensor for capturing image data of the body part in the visible light spectrum and a near infrared light sensor for capturing image data of the body part in the near infrared light spectrum. The biometrics imaging device comprises a time of flight camera configured for capturing three dimensional image data of the body part of the person. The biometrics imaging device is configured to execute an imaging procedure which includes the steps of: capturing three dimensional image data of a current body part posture; determining on the basis of the three dimensional image data a difference between a desired body part posture and the current body part posture; providing on the basis of the determined difference user guidance to the person enabling the person to adapt the body part posture in direction of the desired posture; and capturing at least one of image data in the visible light spectrum and image data in the infrared light spectrum.

WO2020207945 describes a biometrics authentication device for authenticating a person by comparing biometric features of a body part of the person with pre-stored biometric features of body parts of a plurality of registered persons is configured to: capture image data of the body part of the person; determine from the captured image data at least one characteristic geometric body part property of the body part of the person and biometric features of the body part of the person; limit comparison of the biometric features of the body part of the person to pre-stored biometric features of body parts of the plurality of registered persons which have a predefined similarity level with the at least one characteristic geometric body part property of the person.

WO2020207947 discloses a biometrics imaging device for capturing image data of a body part of a person which comprises at least one of a visible light sensor and a near infrared light sensor. The biometrics imaging device comprises a time-of-flight camera configured for capturing three-dimensional image data of the body part. The biometrics imaging device is configured to execute an imaging procedure which includes the steps of: capturing three dimensional image data of a current body part posture; determining on the basis of the three dimensional image data a difference between a desired body part posture and the current body part posture; providing on the basis of the determined difference user guidance to the person enabling the person to adapt the body part posture in direction of the desired posture; and capturing at least one of image data in the visible light spectrum and image data in the infrared light spectrum.

WO2022037924 describes a method and a system comprising: at a hand imaging device, capturing image data of a hand of a current person, at a federation server, comparing a current feature vector determined from the captured image data with prestored feature vectors of enrolled persons, at a user device of the current person, processing second factor information for enabling execution of an electronic payment.

WO2022100971 describes a method and a system enabling authentication of large numbers of enrolled persons. At a biometric sensor, current biometric features of a person are recorded. At a matching server, currently recorded biometric features of the person are compared with prestored biometric features of enrolled persons while applying one or more identifying acceptance tolerances, and positive authentication is signalled in case of a match. At a user device of the person, in case of no positive authentication at the matching server, selecting prestored biometric features of the person at the matching server is enabled for comparison with the currently recorded biometric features while applying a verifying acceptance tolerance, and positive authentication is signalled in case of successful verification.

### Summary of the Invention

It is an objective of the invention to provide a computer-implemented process to solve at least some of the above-mentioned problems of secure personal identification/authentication of a person that initiates a cryptographic transaction in a blockchain-based DLT infrastructure. It is another objective that the method ensures highest level of security for all parties involved. It is another objective that the method can be applied in an uncomplicated and practicable manner and that personal rights are adequately protected.

At least one of the objectives of the present invention is achieved by a computer-implemented process for enrolling a person for later biometric authentication/identification according to claim 1 and a computer-implemented process for authentication of a previously enrolled person according to claim 10.

The computer-implemented process for enrolling a person for later biometric authentication, wherein the person owns an official identification document and a unique key pair consisting of a unique public key and a corresponding unique private key; comprises the steps of:
a.) by a decentralized software application:
   i.) obtaining first information of the official identification document of the person and sending the first information of the official identification document (OID) and the public key (pbl-key) of the person (P) to an identification server (IDS);
   ii.) obtaining second information (i2) directly from the person (P) and sending the second information (i2) captured directly from the person (P) together with the public key (pbl-key) of the person (P) to the identification server (IDS);
b.) by the identification server (IDS) upon receiving first information (i1) and second information (i2) from the decentralized software application (Dapp):
   i.) comparing the first information (i1) of the official identification document (OID) of the person (P) with the second information (i2) directly obtained from the person (P) for matching the person (P) with the official identification document (OID);
   ii.) if comparison is significant (e.g. when a predefined threshold is passed):
      1.) creating a unique digital identifier (IDS-ID);
      2.) reading out Know Your Customer relevant personal data (KYC data) of the person (P) from the information (i1) of the official identification document (OID) of the person (P);
      3.) returning the Know Your Customer relevant personal data (KYC data) to the decentralized software application (Dapp);
      4.) returning the unique digital identifier (IDS-ID) created by the identification server (IDS) to the decentralized software application (Dapp);
c.) by the decentralized software application (Dapp):
   i.) sending the Know Your Customer relevant personal data (KYC data) and the unique digital identifier (IDS-ID) created by the identification server (IDS) to an application server (AS) for storage in a secure first database (DB1);
   ii.) requesting a biometric sensor device (BSD) to obtain biometric features (P-BF) of the person (P) and a golden sample (GS) based on the biometric features (P-BF) of the person (P);
   iii.) sending the golden sample (GS) of the biometric features (P-BF), the unique digital identifier (IDS-ID) created by the identification server (IDS) and the public key (pbl-key) of the person (P) to a federation server (FS) for storage in a secure second database (DB2);
d.) by the federation server (FS):
   i.) returning a unique identifier (FS-ID) created by the federation server (FS) to the decentralized software application (Dapp) as confirmation for successful registration of the person (P);
e.) by the decentralized software application (Dapp):
   i.) sending the public key (pbl-key), the unique digital identifier (FS-ID) created by the federation server (FS) and the unique digital identifier (IDS-ID) created by the identification server (IDS) to the application server (AS);
f.) by the application server (AS):
   i.) storing a key triplet consisting of the public key (pbl-key), the unique digital identifier (FS-ID) created by the federation server (FS) and the unique digital identifier (IDS-ID) created by the identification server (IDS) in the secure third database (DB3).

The decentralized software application, which may be the application creating and managing financial transactions, coordinates the process of enrolment and authentication of the person by coordinating the different servers and the biometric sensor. None of the servers or databases have the entire information of the person, as each sub-process (verification of person by OID, storing and later comparing of biometric features, storing key triplet, storing KYC data) are performed by different servers dedicated to said sub-process.

By storing the key triplet consisting of the public key (pbl-key), the unique digital identifier (FS-ID) created by the federation server (FS) and the unique digital identifier (IDS-ID) created by the identification server (IDS) in the secure database, subsequent identification / authentication (as explained below) of an enrolled person can be realized in a fast and reliable manner. The captured biometric features can be compared directly with the golden sample associated to the public key. Thereby a more reliable authentication of a person with much faster response time is possible.

Thus, the described process of enrolment may bind the unique public key to one or a few golden samples of biometric features of one or a few persons. Thereby the security level by identification in very small sets of pre-stored golden sample is improved and comes close to verification level security.

In addition, the process may be used to enrol a person in the presence of trusted person - locally or remotely, or without a trusted person in a fully automated way, as explain further below.

In order to fulfil the European GDPR requirements, the process for enrolling or authenticating a person does not transmit any scans or images of a body part (e.g. hand, eye or fingertip) of a person externally or stores them locally. Abstract biometric features relevant for a comparison are extracted locally from the scans to use them for anonymous access security by comparing the golden sample stored during local registration with the features from a new current scan. Accordingly, the databases used may be secured GDPR compliant database. An example of such a database is the InterPlanetary File System (IPFS).

For a later externally verified transaction, the golden sample and the biometric features of a currently requested scan are stored via the decentralized software application in a central protected database and compared for identification. The unique public key is transmitted and stored with the golden sample, which significantly increases the level of security when comparing the biometric features, as only a few authorized persons are usually assigned to e.g. a software or hardware wallet having a unique public key.

Know Your Customer relevant personal data, the unique digital identifier (IDS-ID) created by the identification server, and optionally a scan of the official identification document may be stored in a first database (DB1). The first database (DB1) can be managed by the application server or can be managed by the identification server for later retrieving the Know Your Customer relevant personal data via the IDS-ID.

Further embodiments of the invention are set forth in the dependent claims.

In some embodiments the official identification document (OID) may be a document with a face picture of the person (P), preferably a passport or an identity card. Obtaining the first information (i1) of the official identification document (OID) may comprise capturing an image of the official identification document (OID) including the face picture of the person (P). The second information (i2) captured directly from the person (P) may include a recording of a face, preferably a series of face scans, from the person (P). The official identification document (OID) may be scanned or photographed in high quality by a device receiving a request from the decentralized software application.

In some embodiments, comparing the first information (i1) of the official identification document (OID) of the person (P) with the second information (i2) directly obtained from the person (P) may include extracting first face features (OID-FF) from the face picture included in the first information (i1) of the official identification document (OID), extracting second face features (P-FF) from the face of the person (P) included in the second information (i2), and comparing the first face features (OID-FF) with the second face features (P-FF).

Comparing face scans with a picture of an official identification document is the most common and widely accepted method for first identification in an enrolment process. It may be easily confirmed by a trusted person or by an automatic process as explained further below. However, comparing face scans is a rather slow and cumbersome process. For later identification of an already enrolled person, the face scan is replaced by the more convenient biometric identification based on biometric features obtained from the person.

In some embodiments, a liveness check or liveness test of the person may be performed while capturing the second information to guarantee that the second information originates from a real living person. A liveness check or liveness test of the person may also be performed while capturing images or data for obtaining biometric features of the person.

In some embodiments, the Know Your Customer relevant personal data (KYC data) may be selected from the group of name, date of birth, nationality, address, identification number of the official identification document, type of official identification document. The Know Your Customer relevant personal data may be extracted from a high quality photo or scan of the official identification document. Further data, e.g. a bank account number may be added to the Know Your Customer relevant personal data and stored as well.

In some embodiments, the biometric features (P-BF) obtained by the biometric sensor device may be selected from the group of palm print, palm vein, iris, and fingerprint. Typically, the biometric features are different from the face picture of the official identification document. The biometric features are extracted from images of a body part such as a hand, an eye or a finger. The extraction of biometric features from a body part, e.g. a hand, and subsequent comparison with pre-stored biometric features are known for example from WO2020207945.

In some embodiments, the identification server may be elDAS compliant.

In some embodiments the secure first database and/or the secure second database and/or the secure third database are GDPR compliant databases (e.g. InterPlanetyry File System IPFS).

In some embodiments, the person (P) may hold a software wallet, preferably a non-custodial software wallet, or a hardware wallet, preferably a biometric secured hardware wallet (BSHW), and the unique key pair is generated by the software or hardware wallet in a seed phrase. A biometric secured hardware wallet is a hardware wallet comprising a biometric sensor device for obtaining biometric features of the person holding the hardware wallet. The unique public key (pbl-key) may be a public wallet address of the software wallet or the hardware wallet of the person (P).

In case of a software wallet, the decentralized software application may create the unique key pair out of a randomly created seed phrase (e.g. 12 words from a defined collection of words). The unique public key may be used as a unique account number or public wallet address while the private key, stored encrypted in the decentralized software application program space, may be used to encrypt a transmission in the blockchain.

In case of a hardware wallet the creation process runs on the hardware wallet in the same way. The unique private key is stored in a special encryption processor and never leaves the hardware wallet, while the unique public key is transferred to the decentralized software application. Encryption of a transmission is executed in the hardware module.

### Enrolment in the presence of a trusted person

The process for enrolling may be used to enrol a person in the presence of trusted person - locally or remotely - for confirmation of the identity of the person and that the biometric features indeed belong to the person.

In some embodiments, the decentralized software application (Dapp) may request confirmation of the identity of the person (P) and optionally the Know Your Customer relevant personal data (KYC data) by a trusted person (TP) and may send the confirmation to the identification server (IDS) before receiving the unique digital identifier (IDS-ID) created by the identification server (IDS).

The decentralized software application (Dapp) may display the Know Your Customer relevant personal data (KYC data) red out by the identification server (IDS) for verification and confirmation by the trusted person (TP).

The decentralized software application proceeds with obtaining biometric features (P-BF) of the person (P) only upon confirmation by the trusted person (TP).

In some embodiments, after obtaining the biometric features (P-BF) of the person (P), the decentralized software application (Dapp) may request confirmation by a trusted person (TP) that the obtained biometric features (P-BF) belong to the person (P).

During the enrolment process, the trusted person may be present at the same location as the person to be enrolled and may confirm that the person to enrolled is a real person and corresponds to the person of the official identification document and that no other person is present. Alternatively, the trusted person may be in a remote location when the person to be enrolled is monitored by a camera device until the enrolment process has been completed. The camera device is used to monitor that no other person is present.

Thus, identity of the person (P) may be locally or remotely confirmed based on comparison with the official identification document (OID) of the person (P) by the trusted person (TP) present during the registration process. In a first step, personal data may be entered in a form, then compared by the trusted person with the official identification document, corrected when needed and finally confirmed.

For confirmation, the Know Your Customer relevant personal data (KYC data) and optionally additional data is entered into a form and verified and confirmed by the trusted person. If necessary, the data may be corrected before confirmation.

### Fully automated enrolment without trusted person

The process for enrolling may be used to enrol a person without a trusted person in a fully automated way.

In some embodiments, the person may hold a biometric secured hardware wallet, which is initialized by storing biometric features of the person in the biometric secured hardware wallet as golden sample of the biometric features. The unique key pair may be generated by the biometric secured hardware wallet.

In some embodiments, the biometric secured hardware wallet may comprise a camera for obtaining first information of the official identification document of the person and for obtaining second information directly from the person. Thus, the first information (i1) of the official identification document (OID) may be obtained by the biometric secured hardware wallet (BSHW) of the person (P) and/or the second information (i2) may be directly captured from the person (P).

In some embodiments, the biometric secured hardware wallet may include a biometric sensor device to obtain biometric features of the person. The biometric sensor device may be a biometrics imaging device as disclosed in WO2020207947.

In some embodiments, obtaining second information (i2) directly from the person (P) and obtaining biometric features (P-BF) of the person (P) is performed via the biometric secured hardware wallet (BSHW) of the person (P) by obtaining a non-interrupted imaging sequence of the face and a body part of the person (P), wherein the body part is used for obtaining the biometric features (P-BF), following the steps of:
a.) extracting face features (P-FF) from the face of the person (P) representing the second information (i2) for later comparison with the first information (i1) by the identification server (IDS);
b.) guiding the person (P) to position the body part for biometric scanning, while continuously monitoring the face and the body part to guarantee that the face and the body part belong to the same person (P);
c.) performing the step of obtaining biometric features (P-BF) of the person (P) by scanning the body part and extracting biometric features (P-BF) of the person (P);
d.) comparing the extracted biometric features (P-BF) with the golden sample (GS) stored on the biometric secured hard wallet (BSHW);
e.) if comparison passed:
   i.) sending the extracted face features (P-FF) from the face of the person (P) as second information (i2) to the decentralized software application (Dapp), and
   ii.) sending the golden sample (GS) to the decentralized software application (Dapp) for later sending the golden sample (GS) and the public key (pbl-key) of the person (P) to the federation server (FS) for storage in the secure second database (DB2).

The step of comparing the extracted biometric features with the golden sample of the biometric features stored on the biometric secured hardware wallet guarantees that no not locally registered person can be externally registered without having a local access and a well-prepared golden sample on the hardware wallet.

### Process for authentication

The invention further refers to a computer-implemented process for authentication of a person (P') previously enrolled according to the computer-implemented process as described above. The process may be used by a person initiating e.g. a request for a transaction and allows for fast and reliable authentication of the person.

The process comprises the steps of:
a.) by the decentralized software application (Dapp):
   i.) requesting a biometric sensor device (BSD) to obtain biometric features (P-BF') of the person (P');
   ii.) obtaining a public key (pbl-key') of the person (P'), and
   iii.) sending the biometric features (P-BF') and the public key (pbl-key') of the person (P') to the federation server (FS);
b.) by the federation server (FS):
   i.) comparing the biometric features (P-BF') of the person (P') with the golden sample (GS') associated to the public key (pbl-key'), and
   ii.) if comparison is significant: returning the unique digital identifier (FS-ID') associated to the golden sample (GS) corresponding to the biometric features (P-BF') to the decentralized software application (Dapp) for confirmation that Person (P') has been identified;
c.) by decentralized software application (Dapp):
   i.) sending third information (i3) related to a person's (P') request together with the unique digital identifier (FS-ID') to the application server (AS);
d.) by the application server (AS):
   i.) storing third information (i3) together with the unique digital identifier (FS-ID') from the federation server (FS) and the corresponding unique digital identifier (IDS-ID') of the key triplet in the secure fourth database (DB4).

In some embodiments the process for authentication is part of a transaction process based on distributed ledger technology.

The biometric sensor device may be part of a biometric secured hardware wallet as described above.

In the event of a positive comparison result, the result is the unique digital identifier (FS-ID') of the person, which has been created by the federation server (FS) initial enrolment. This also enables the GDPR-compliant separate storage of personal data and logging data from transaction characteristics in a safe and secure data storage like IPFS.

The fourth database (DB4) may be a separate transaction logging database managed by the application server or may be the same as the first or third database (DB1, DB3).

### Biometric sensor device

The invention further relates to a biometric sensor device for use in a enrolment or authentication process as described above. The biometric sensor device is a biometric secured hardware wallet comprising a biometric sensor.

In some embodiments the biometric sensor may include at least one of a visible light sensor and a near infrared light sensor. The biometric sensor device may comprise a time-of-flight camera.

In some embodiments the biometric sensor may be configured to extract biometric features of a person from image data taken by the biometric sensor.

The biometric secured hardware wallet may be secured with biometric hand features e.g. derived from skin pattern (e.g. palm print pattern), vein pattern (e.g. palm vein pattern) and/or geometric features of the hand.

The biometric secured hardware wallet may have the functionality of a document scanner for obtaining first information of the official identification document.

The biometric secured hardware wallet may have functionality of a face scanner for obtaining second information based on face scans of the person.

With the described process of enrolment, the biometric secured hardware wallet may bind the unique public wallet address as unique public key to the golden samples of the biometric features of the person to improve the security level by identification in very small sets of pre-stored golden sample. Such an identification comes close to verification level security.

### Brief Explanation of the Figures

The invention is described in greater detail below with reference to embodiments that are illustrated in the figures. The figures show:
- Fig. 1: chart of an enrolment process;
- Fig. 2: chart of an authentication process;
- Fig. 3: chart of an enrolment process fully automated without trusted person;
- Fig. 4: chart of an authentication process with a biometric secured hard wallet;
- Fig. 5: illustration of four steps within a non-interrupted imaging sequence.

### Embodiments of the Invention

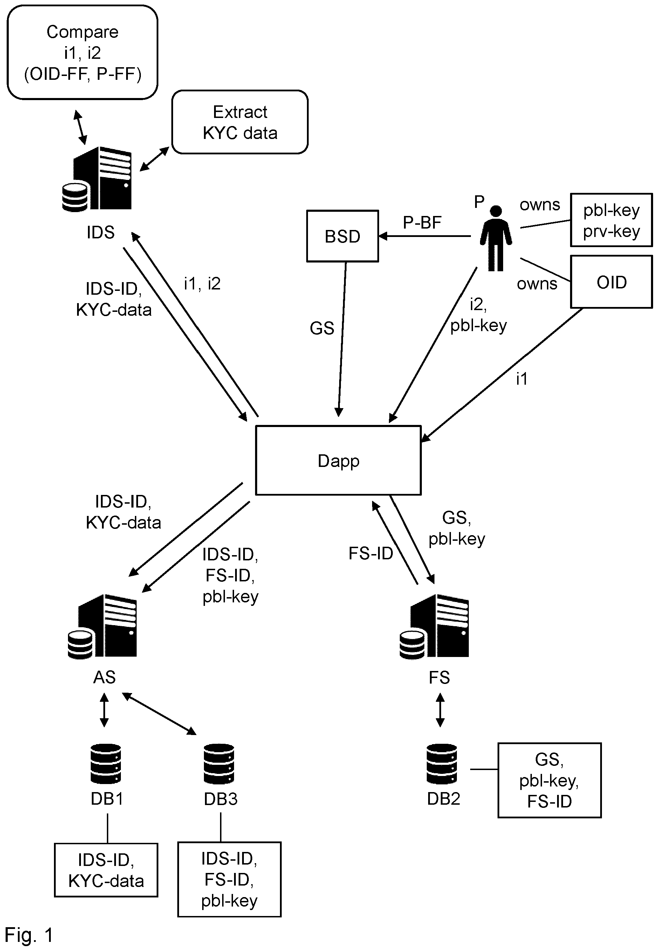

Fig. 1 shows a chart of a computer-implemented process for enrolling a person (P) for later biometric authentication. The person (P) typically holds a passport or an identity card as an official identification document (OID) including a face picture of the person (P). The person P further holds a unique key pair consisting of a unique public key (pbl-key) and a unique private key (prv-key). The unique key pair may be a key pair of a software or hardware wallet.

The process for enrolling the person (P) comprises a decentralized software application (Dapp) coordinating several servers for performing different sub-processes. In a first set of steps the Dapp obtains first information (i1) of the OID of the person (P), which may be a high-quality scan of photo of the OID including the face picture of the person (P). The Dapp further captures second information (i2) from directly from the person (P), which may be one or more scans of the face of the person (P). The Dapp then sends the first information (i1) the second information (i2) and the public key (pbl-key) from the person (P) to an identification server (IDS).

The IDS the performs the sub-process of verifying the person (P) by comparing the first information (i1), e.g. face features (OID-FF) from the face picture, of the OID with the second information (i2), e.g. face features (P-FF) from the face scan, directly captured from the person (P) for verifying a match of the person (P) with the person of the OID. The IDS furthermore extracts Know Your Customer relevant personal data (KYC data) from the scan of the OID.

When verification of the person (P) is completed and positive, the IDS generates a unique digital identifier (IDS-ID) and sends the IDS-ID together with the KYC data back to the Dapp.

The Dapp sends the KYC data and the IDS-ID to an application server (AS) to be stored in secure database (DB1). The KYC data may be later retrieved by the IDS-ID associated to the identified person (P).

The Dapp then starts a second set of steps for registering biometric features of the person (P) by requesting a biometric sensor device (BSD) to obtain biometric features (P-BF) of the person (P). The biometric features (P-BF) are different to the face scan of the person (P) and may be obtain by scans of different body parts such as an eye for an iris scan, a hand for a scan of palm prints, palm veins and/or geometric features of the hand or form fingertips to retrieve fingerprints. The BSD scan the body part and extracts biometric features from the scan. The biometric features are then sent as a golden sample (GS) of the person (P) to the Dapp. The Dapp sends the GS and the public key (pbl-key) to a federation server (FS) for storage in a secure database (DB2).

Upon receipt of the GS and the public key of the person (P), the FS creates a unique digital identifier (FS-ID) and returns the FS-ID to the Dapp to signal successful registration of the person (P). The GS, the public key (pbl-key) and the FS-ID associated to the person (P) are then stored in a secure database (DB2) of the FS.

In a last set of steps, the Dapp sends the public key (pbl-key), the FS-ID created by the federation server (FS) and the IDS-ID created by the identification server (IDS) to the application server (AS). The AS forms a key triplet of public key (pbl-key), FS-ID and IDS-ID and stores it in a secure database (DB3). The enrolment process is completed.

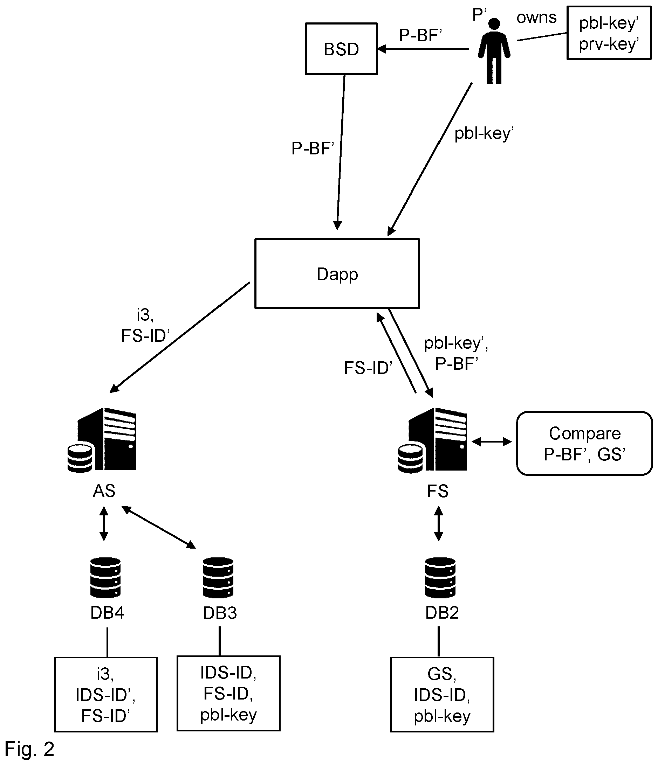

Once enrolment is complete, a transaction carried out by the Dapp can now be easily saved with its initiator in a logging file. This requires only a computer-implemented process for authentication of an enrolled person as shown in the chart of Fig. 2.

The process for authentication comprises again a decentralized software application (Dapp) coordinating several servers for performing different sub-processes. The Dapp request the BSD to obtain biometric features (P-BF') of the person (P') to be authenticated. This can be done the same way as explained above. The Dapp further request the unique public key (pbl-key') of the person (P') and sends the newly acquired biometric features (P-BF') together with the unique public key (pbl-key') of the person (P') to the federation server (FS).

The FS then retrieves the golden sample associated with the unique public key (pbl-key') from the database (DB2) and compares it with the biometric features (P-BF'). If comparison is positive, the FS returns the FS-ID' associated with the unique public key (pbl-key') to the Dapp for confirmation that the person (P') has been verified or identified.

The Dapp then sends third information (i3), which e.g. relates to the person's (P') transactional data, together with the FS-ID' to the application server (AS).

The AS retrieves the IDS-ID' associated with the FS-ID' from the database (DB3) and stores the third information (i3) together with the FS-ID' and the IDS-ID' in a secure database (DB4). The database DB4 may be the same as the database DB1.

The enrolment process may be carried out in the presence of trusted person - locally or remotely. In this case the trusted person oversees the scanning of the OID and the capturing of the biometric features to ensure that no other person is present. The trusted person also verifies and confirms the KYC data of the person.

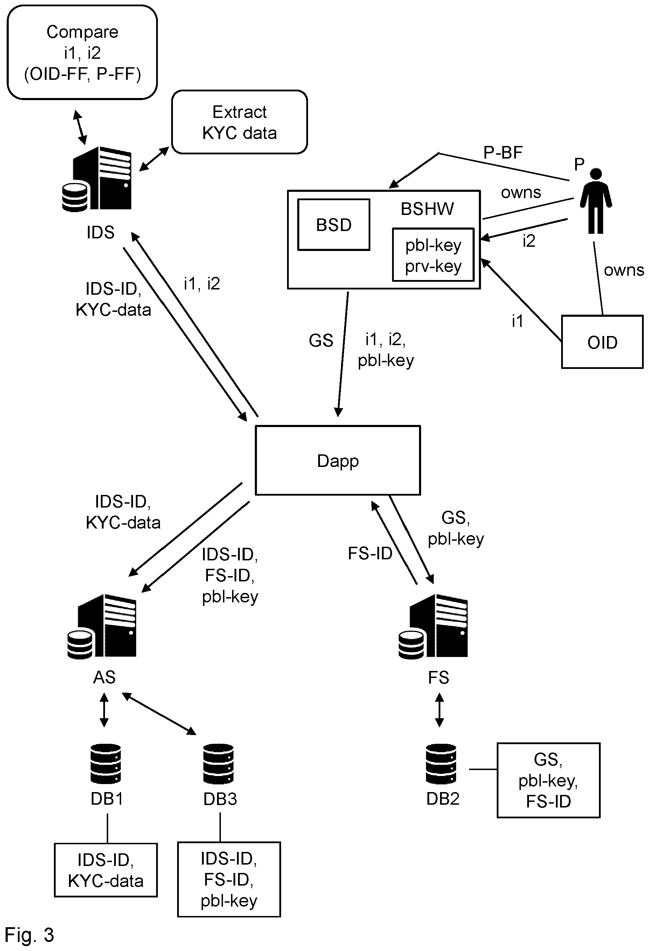

The enrolment process may also be carried out without a trusted person in a fully automated way as shown in the chart of Fig. 3. In this process the person (P) holds a biometric secured hardware wallet (BSHW), which is initialized by obtaining biometric features (P-BF) of the person (P) and storing the golden sample (GS) of the biometric features (P-BF) in the BSHW.

The BSHW comprises a biometric sensor device (BSD) for obtaining biometric features (P-BS) as explained above. The BSHW may also comprise a camera for obtaining the first information (i1) of the OID and for obtaining second information (i2), e.g. face pictures, directly from the person (P).

Obtaining the second information (i2), e.g. a face scan, of the person (P) and obtaining the biometric features (P-BF) of the person (P) is performed via the BSHW. Therefore, the BSHW obtains a non-interrupted imaging sequence of the face and a body part of the person (P), wherein the body part is used to capture the biometric features (P-BF).

The BSHW performs the steps of: a.) extracting face features (P-FF) from the second information (i2) recorded in the beginning of the non-interrupted imaging sequence, while the face and the body part are visible; b.) guiding the person to position the body part for biometric scanning, while continuously monitoring the face and the body part to guarantee that the face and the body part belong to the same person (P); c.) obtaining biometric features (P-BF) of the person (P) by scanning the body part and extracting biometric features (P-BF) of the person (P); d.) comparing the extracted biometric features (P-BF) with the golden sample (GS) stored on the biometric secured hardware wallet (BSHW).

If comparison is positive, the extracted face features (P-FF) are sent as second information (i2) to the Dapp. Also, the golden sample (GS) and the public key (pbl-key) are sent to the Dapp.

The Dapp - as explained in the process above - sends the first and second information (i1, i2) to the IDS for comparison. If comparison is positive the Dapp proceeds as described in the process above.

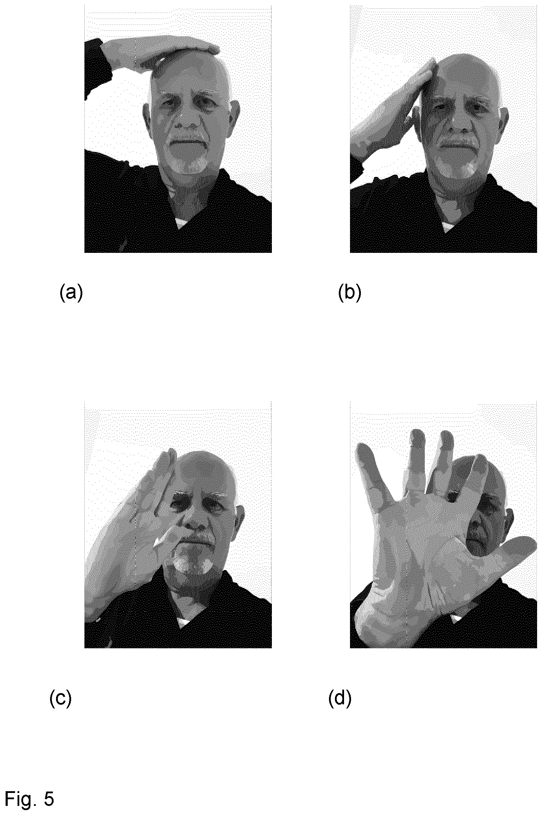

Fig. 5 shows an illustration of four steps within the non-interrupted imaging sequence for capturing biometric features from a hand. In Fig. 5(a) at the beginning of the sequence the person (P) holds his hand over the face. The BSHW can thereby record a face picture and extract face features for later comparison with the picture of the OID. Fig. 5(b) and Fig. 5(c) show how the hand is slowly moved into a position for capturing images for extracting biometric features of the hand. In Fig. 5(d) the hand is finally positioned, and the biometric features can be obtained. During the entire sequence, the face and the hand are always visible confirming that the face features and the biometric features belong to the same person.

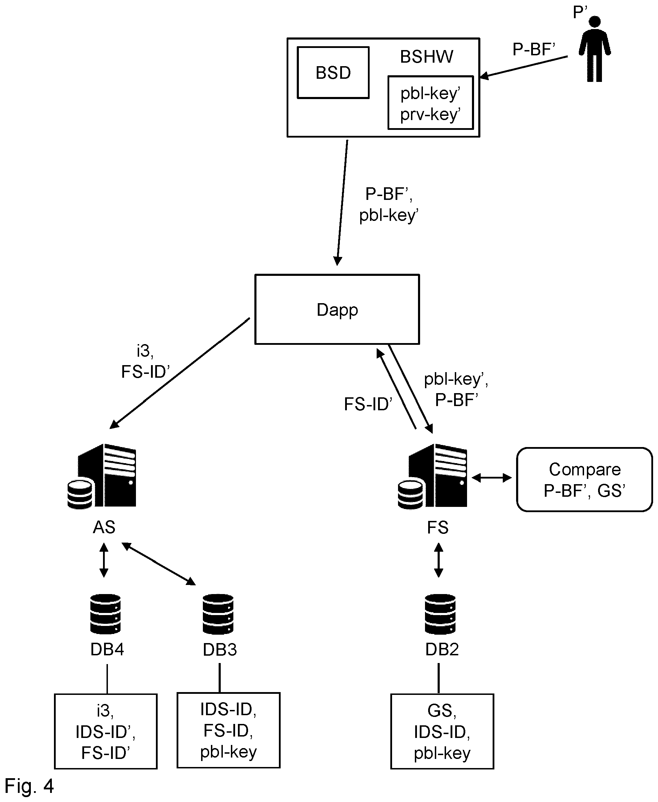

Fig. 4 shows a chart of the process for authentication with BSHW. The Dapp sends a request to the BSHW to obtain biometric features (P-BF') from the person (P') to be authenticated. The BSHW sends the biometric features (P-BF') together with the public key (pbl-key') of the person (P') to the Dapp. The remaining process is the same as described above.

### Reference Signs / Abbreviations

- AS: application server
- Dapp: decentralized software application
- DB1: secure first database
- DB2: secure second database
- DB3: secure third database
- DB4: secure fourth database
- BSD: biometric sensor device
- FS: federation server
- FS-ID: unique digital identifier
- GS: golden sample
- i1, i2: information, data
- IDS: identification server
- IDS-ID: unique digital identifier
- KYC data: Know Your Customer relevant personal data
- OID: official identification document
- OID-FF: first face features (obtained from OID)
- P: person
- P-FF: second face features (obtained from P)
- P-BF: biometric features (obtained from P)
- pbl-key: unique public key of unique keypair
- prv-key: unique privat key of unique keypair

## Claims

1. Computer-implemented process for enrolling a person (P) for later biometric authentication,
wherein the person (P) owns an official identification document (OID) and a unique key pair consisting of a unique public key (pbl-key) and a corresponding unique private key (prv-key);
wherein the process comprises the steps of:
a. by a decentralized software application (Dapp):
i. obtaining first information (i1) of the official identification document (OID) of the person (P) and sending the first information (i1) of the official identification document (OID) and the public key (pbl-key) of the person (P) to an identification server (IDS);
ii. obtaining second information (i2) directly from the person (P) and sending the second information (i2) captured directly from the person (P) together with the public key (pbl-key) of the person (P) to the identification server (IDS);
b. by the identification server (IDS) upon receiving first information (i1) and second information (i2) from the decentralized software application (Dapp):
i. comparing the first information (i1) of the official identification document (OID) of the person (P) with the second information (i2) directly obtained from the person (P) for matching the person (P) with the official identification document (OID);
ii. if comparison is significant:
1. creating a unique digital identifier (IDS-ID);
2. reading out Know Your Customer relevant personal data (KYC data) of the person (P) from the information (i1) of the official identification document (OID) of the person (P);
3. returning the Know Your Customer relevant personal data (KYC data) to the decentralized software application (Dapp);
4. returning the unique digital identifier (IDS-ID) created by the identification server (IDS) to the decentralized software application (Dapp);
c. by the decentralized software application (Dapp):
i. sending the Know Your Customer relevant personal data (KYC data) and the unique digital identifier (IDS-ID) created by the identification server (IDS) to an application server (AS) for storage in a secure first database (DB1);
ii. requesting a biometric sensor device (BSD) to obtain biometric features (P-BF) of the person (P) and a golden sample (GS) based on the biometric features (P-BF) of the person (P);
iii. sending the golden sample (GS) of the biometric features (P-BF) and the public key (pbl-key) of the person (P) to a federation server (FS) for storage in a secure second database (DB2);
d. by the federation server (FS):
i. returning a unique identifier (FS-ID) created by the federation server (FS) to the decentralized software application (Dapp) as confirmation for successful registration of the person (P);
e. by the decentralized software application (Dapp):
i. sending the public key (pbl-key), the unique digital identifier (FS-ID) created by the federation server (FS) and the unique digital identifier (IDS-ID) created by the identification server (IDS) to the application server (AS);
f. by the application server (AS):
i. storing a key triplet consisting of the public key (pbl-key), the unique identifier (FS-ID) created by the federation server (FS) and the unique digital identifier (IDS-ID) created by the identification server (IDS) in the secure third database (DB3).

2. Process according to claim 1, wherein the official identification document (OID) is a document with a face picture of the person (P), preferably a passport or an identity card, and
wherein obtaining the first information (i1) of the official identification document (OID) comprises capturing an image of the official identification document (OID) including the face picture of the person (P), and
wherein the second information (i2) captured directly from the person (P) includes a recording of a face, preferably a series of face scans, from the person (P).

3. Process according to claim 2, wherein comparing the first information (i1) of the official identification document (OID) of the person (P) with the second information (i2) directly obtained from the person (P) includes extracting first face features (OID-FF) from the face picture included in the first information (i1) of the official identification document (OID), extracting second face features (P-FF) from the face of the person (P) included in the second information (i2), and comparing the first face features (OID-FF) with the second face features (P-FF).

4. Process according to one of the preceding claims, wherein the person (P) holds a software wallet, preferably a non-custodial software wallet, or a hardware wallet, preferably a biometric secured hardware wallet (BSHW), and the unique key pair is generated by the software or hardware wallet in a seed phrase, and
wherein the public key (pbl-key) is a public wallet address of the software wallet or the hardware wallet of the person (P).

5. Process according to one of the preceding claims, wherein the decentralized software application (Dapp) requests confirmation of the identity of the person (P) and optionally the Know Your Customer relevant personal data (KYC data) by a trusted person (TP) and sends the confirmation to the identification server (IDS) before receiving the unique digital identifier (IDS-ID) created by the identification server (IDS).

6. Process according to one of the preceding claims, wherein after obtaining the biometric features (P-BF) of the person (P), the decentralized software application (Dapp) requests confirmation by a trusted person (TP) that the obtained biometric features (P-BF) belong to the person (P).

7. Process according to one of the claims 1 to 4, wherein the person (P) holds a biometric secured hardware wallet (BSHW), which is initialized by storing biometric features (P-BF) of the person (P) in the biometric secured hardware wallet (BSHW) as golden sample (GS) of the biometric features (P-BF).

8. Process according to claim 7, wherein the biometric secured hardware wallet (BSHW) comprises a camera for obtaining first information (i1) of the official identification document (OID) of the person (P) and for obtaining second information (i2) directly from the person (P), and/or wherein biometric secured hardware wallet (BSHW) includes the biometric sensor device (BSD) to obtain biometric features (P-BF) of the person (P).

9. Process according to claim 8, wherein obtaining second information (i2) directly from the person (P) and obtaining biometric features (P-BF) of the person (P) is performed via the biometric secured hardware wallet (BSHW) of the person (P) by obtaining a non-interrupted imaging sequence of the face and a body part of the person (P), wherein the body part is used for obtaining the biometric features (P-BF), following the steps of:
a. extracting face features (P-FF) from the face of the person (P) representing the second information (i2) for later comparison with the first information (i1) by the identification server (IDS);
b. guiding the person (P) to position the body part for biometric scanning, while continuously monitoring the face and the body part to guarantee that the face and the body part belong to the same person (P);
c. performing the step of obtaining biometric features (P-BF) of the person (P) by scanning the body part and extracting biometric features (P-BF) of the person (P);
d. comparing the extracted biometric features (P-BF) with the golden sample (GS) stored on the biometric secured hardware wallet (BSHW);
e. if comparison passed:
i. sending the extracted face features (P-FF) from the face of the person (P) as second information (i2) to the decentralized software application (Dapp), and
ii. sending the golden sample (GS) to the decentralized software application (Dapp) for later sending the golden sample (GS) and the public key (pbl-key) of the person (P) to the federation server (FS) for storage in the secure second database (DB2).

10. Computer-implemented process for authentication of a person (P') previously enrolled according to the computer-implemented process of one preceding claims, wherein the process comprises the steps of:
a. by the decentralized software application (Dapp):
i. requesting a biometric sensor device (BSD) to obtain biometric features (P-BF') of the person (P');
ii. obtaining a public key (pbl-key') of the person (P'), and
iii. sending the biometric features (P-BF') and the public key (pbl-key') of the person (P') to the federation server (FS);
b. by the federation server (FS):
i. comparing the biometric features (P-BF') of the person (P') with the golden sample (GS') associated to the public key (pbl-key'), and
ii. if comparison is significant: returning the unique digital identifier (FS-ID') associated to the golden sample (GS) corresponding to the biometric features (P-BF') to the decentralized software application (Dapp) for confirmation that Person (P') has been identified;
c. by decentralized software application (Dapp):
i. sending third information (i3) related to a person's (P') request together with the unique digital identifier (FS-ID') to the application server (AS);
d. by the application server (AS):
i. storing third information (i3) together with the unique digital identifier (FS-ID') from the federation server (FS) and the corresponding unique digital identifier (IDS-ID') of the key triplet in the secure fourth database (DB4).

11. Process according to claim 10, wherein the authentication is part of a transaction process based on distributed ledger technology.

12. A biometric sensor device for use in a process according to one of preceding claims, wherein the biometric sensor device is a biometric secured hardware wallet (BSHW) comprising a biometric sensor.

13. A biometric sensor device according to claim 12, wherein the biometric sensor includes at least one of a visible light sensor and a near infrared light sensor.

14. A biometric sensor device according to claim 12 or 13, the biometric sensor device comprises a time-of-flight camera.

15. A biometric sensor device according to one of claims 12 to 14, wherein the biometric sensor is configured to extract biometric features of a person (P-BF) from image data taken by the biometric sensor.
